# EUROPÄISCHE PATENTSCHRIFT

(11) **EP 3 218 686 B1**
(45) Veröffentlichungstag und Bekanntmachung des Hinweises auf die Patenterteilung: **30.12.2020**
(21) Anmeldenummer: 15778907.4
(22) Anmeldetag: 07.10.2015
(51) Int. Cl.: G01M 13/023, G01L 5/04

(54) **VERFAHREN UND VORRICHTUNG ZUR BESTIMMUNG EINES SPANNUNGSZUSTANDES**
METHOD AND DEVICE FOR DETERMINING A STRESS STATE
PROCÉDÉ ET DISPOSITIF PERMETTANT DE DÉTERMINER UN ÉTAT DE TENSION

(30) Priorität: 11.11.2014 DE 102014222944
(43) Veröffentlichungstag der Anmeldung: 20.09.2017
(73) Patentinhaber: ContiTech Antriebssysteme GmbH, 30165 Hannover (DE)
(72) Erfinder: FISS, Tim, 30519 Hannover (DE); KLINGEBIEL, Lukas, 30519 Hannover (DE)
(74) Vertreter: Kilsch, Armin Ralph
(86) Internationale Anmeldenummer: PCT/EP2015/073076
(87) Internationale Veröffentlichungsnummer: WO 2016/074859

(56) Entgegenhaltungen:
- WO-A1-2014/068888
- WO-A2-02/079747
- DE-A1- 3 333 710
- DE-A1- 19 616 194
- US-A- 5 798 456
- US-A1- 2009 319 203
- US-B1- 6 789 035

## Beschreibung

Die Erfindung betrifft ein Verfahren gemäß vorliegenden Anspruch 1 zur Bestimmung der statischen Trumkraft eines unter Spannung stehenden Antriebsriemens, bei dem der Antriebsriemen in Schwingungen versetzt und die Schwingungen bzw. die Schwingungszyklen des Antriebsriemens über Sensoren erfasst und als Eingangsgrößen einer aus Prozessoren, Speichern und Verarbeitungseinrichtungen bestehenden und in Form einer elektronischen Schaltung ausgebildeten Recheneinheit zugeführt werden, wobei in der Recheneinheit mit Hilfe eines Algorithmus aus den erfassten Schwingungen unter Berücksichtigung von Materialparametern und geometrischen Kenngrößen des Antriebsriemens die statische Trumkraft des unter Spannung stehenden Antriebsriemens berechnet und als visualisiertes Signal einer Anzeigeeinrichtung bereitgestellt wird.

Die Bestimmung eines mechanischen Spannungszustandes in einem statisch belasteten Antriebsriemens ist beispielsweise sehr wichtig beim Einbau von Antriebsriemen, z.B. von Keilriemen, Mehrkeilriemen, Keilrippenriemen etc. zum Antrieb von Aggregaten bzw. zur Übertragung von Leistungen. Dabei muss der Spannungszustand des unbelasteten Riemens innerhalb bestimmter Grenzen liegen, damit keine zu starke Belastung von Lagern, Antrieben, Motoren, Riemen etc. entsteht, welche zu einem vorzeitigen Ausfall oder zu einer Verkürzung der Lebensdauer führen könnte.

Hierzu ist es nötig die Hauptspannungen, beispielsweise die nach dem Einbau vorhandene Zugspannung in einem Antriebsriemen, also die Riemenvorspannkraft, zu überprüfen und ggf. durch Trimm- oder Anpassungsmaßnahmen zu verändern.

Die gewärtigen Meßverfahren zur Ermittlung der Riemenvorspannkraft von Antriebsriemen basieren im Wesentlichen auf mechanischen, akustischen und optischen Verfahren. Für diese Verfahren sind spezielle Messgeräte bzw. Vorrichtungen notwendig. Für die Anschaffung dieser Geräte sind erhebliche Anschaffungskosten zu tätigen. Die Vorspannung von Riementrieben wird üblicherweise mit Vorspannungsmessgeräten ermittelt, die die Eigenfrequenz eines frei schwingenden Trums messen. Die Vorspannkraft wird dann aus der gemessenen Eigenfrequenz, der Massebelegung des Riemens und der Länge des frei schwingenden Trums berechnet. Alle Messverfahren und -geräte ermitteln diese Frequenz als einzige relevante Messgröße. Dafür stehen verschiedene Sensoren zur Auswahl. Insbesondere die Messung der Luftschallschwingung und optische Sensoren zur Ermittlung der Schwingung der Riemenoberfläche werden genutzt. Allen Geräten ist gemein, dass diese im Wesentlichen aus einer relativ großen Elektronikbox, d.h. einem großen Gehäuse für die Elektronikbauteile und aus per Kabel oder Lichtleiter angeschlossenen Sensoren bestehen.

Nachteilig bei den bekannten Schwingungsmessgeräten ist insbesondere, dass eine Zweihandbedienung zwingend erforderlich ist, nämlich das Halten des relativ großen Messgerätes und das Auslenken des Riementrums. Dabei tritt die Notwendigkeit, die erforderliche Riemenvorspannkraft zur messen, in der Praxis ständig auf. In kleineren Werkstätten/Unternehmen bzw. Serviceabteilungen sind die kostenintensiven Messgeräte aber oft nicht vorhanden.
Die DE 33 33 710 A1 offenbart eine Anwendung eines bekannten Verfahrens zum Messen der Vorspannkraft in einem vorgespannten Betätigungsseil auch zum Einstellen der Vorspannkraft in einem endlosen Riemen eines Riementriebs. Dabei wird mit einer einstellbaren Spannrolle die Spannung des Riementriebs solange erhöht, bis die Eigenfrequenz bzw. die Resonanz des Riemens durch eine Auswertungseinheit ermittelt wird.

Die US 6,789,035 B1 offenbart ein Verfahren, eine Vorrichtung und ein Programm zur Schwingungsanalyse eines Antriebsriemens bei vorgegebener Spannung und bei vorgegebenen weiteren konstruktiven Einzelheiten (Anzahl der Rollen, Anzahl der Spanner, Drehmomente, Trägheiten etc.).

Die US 2009/0319203 A1 offenbart ein Sensorsystem, welches bei einem Fahrradantrieb u.a. Pedalkraft, Beschleunigungen, Drehzahlen sowie eine dazu proportionale Streckung der Antriebskette ermitteln kann.

Die WO 02/079747 A2 offenbart ein Kontrollsystem zur Beobachtung von Maschinenteilen, unter anderem auch zu Beobachtung von Riementrieben, bei denen vom Riementrieb entfernt angeordnete Sensoren Temperaturen, Schwingungen und andere Eigenschaften dieses Maschinenteils aufnehmen sollen..

Die DE 196 16 194 A1 offenbart eine Vorrichtung zur Messung der Riemenspannung, bei der eine aufgebrachte Riemenschwingung mit Hilfe eines Mikrofons oder eines Beschleunigungsmessers aufgenommen und vorzugsweise über Funk einer Recheneinheit zugeleitet wird. Über eine Referenztabelle wird in der Recheneinheit aus der Frequenz der Schwingung die Riemenspannung ermittelt und mit einer Anzeigeeinrichtung dargestellt

Die US 5,798,456 offenbart eine Messung der Dämpfungscharakteristik bei einem elastischen Riemen auf einem Prüfstand.

Die WO 2104/068888 A1 offenbart eine Vorrichtung und ein Verfahren, womit eine Eigenschwingung eines Antriebsriemens abhängig von der Riemenspannung berechnet werden kann.

Es sei darauf hingewiesen dass die Antriebsriemen hier beispielhaft genannt sind. Ähnliche Verfahren können auch bei anderen Bauteilen erforderlich werden, beispielsweise bei Kettentrieben oder Förderbändern.

Für die Erfindung bestand also die Aufgabe, eine einfache, klein bauende Vorrichtung und ein einfach anzuwendendes Messverfahren zur Bestimmung eines mechanischen Spannungszustandes bereitzustellen, welche ohne kostenintensive Messgeräte und Messapparaturen funktionieren, wobei die Vorrichtung auf einfachste Weise mit nur einer Hand zu bedienen ist, wenig Bauteile aufweist und preiswert hergestellt werden kann.

Gelöst wird diese Aufgabe durch die Merkmale des Hauptanspruchs gemäß vorliegenden Verfahrensanspruchs 1. Weitere vorteilhafte Ausbildungen sind in den Unteransprüchen offenbart.

Dabei wird der Antriebsriemen in Schwingungen versetzt, z.B. durch Anschlagen mit einem kleinen Hammer, und die Schwingungen/Schwingungszyklen des Antriebsriemens werden über mit dem Antriebsriemen verbundene und die Schwingungen bzw. die Schwingungszyklen detektierende Beschleunigungssensoren erfasst und sodann als Eingangsgrößen einer Recheneinheit zugeführt. In der Recheneinheit wird, wie anfänglich dargestellt, mit Hilfe eines Algorithmus aus den erfassten Schwingungen unter Berücksichtigung von Materialparametern und geometrischen Kenngrößen des Bauteils mindestens eine Hauptspannung des augenblicklich vorliegenden Spannungszustands des Bauteiles, in aller Regel die Zugspannung berechnet und als Signal einer Anzeigeeinrichtung bereitgestellt. Die Berechnung des Spannungszustandes wird gestartet, wenn drei aufeinander folgende Schwingungen/Schwingungszyklen eine Abweichung in ihren maßgeblichen Perioden/Wellenlängen untereinander von weniger als 3% aufweisen. Auf diese Weise werden zufällige Schwingungen nicht im Ergebnis der Berechnung verarbeitet und können so auch nicht bei der Berechnung des Spannungszustandes zu Fehlern führen. Damit lässt sich auf einfache Weise und ohne komplizierte Messmittel der augenblicklich vorliegende Spannungszustand bzw. mindestens eine der Hauptspannungen im Bauteil ermitteln.

Dabei werden maximal zehn vollständige Schwingungszyklen erfasst und dann der Auswertung in Form einer Berechnung des Spannungszustandes zugrunde gelegt. Dadurch wird das Ende der Messung automatisch erkannt und die am Ende unsauber abklingende Eigenschwingung nicht mehr mit ausgewertet, was wiederum die Qualität der Spannungsberechnung deutlich verbessert.

Eine weitere vorteilhafte Ausbildung besteht darin, dass die Beschleunigungssensoren jeweils lediglich den Nulldurchgang einer Beschleunigung bzw. einen definierten Beschleunigungswert oder -bereich erfassen. Auf diese Weise können auch Schwingungen, deren maximale Beschleunigungen größer als der Messbereich des jeweiligen Sensors sind, sauber gemessen werden, da nur der Durchgang, nicht jedoch die vollständige Amplitudenform erforderlich sind.

Eine zur Durchführung des erfindungsgemäßen Verfahrens besonders geeignete Vorrichtung besteht darin, dass die Vorrichtung gemäß vorliegenden Anspruchs 3 ein miniaturisiertes Gehäuse aufweist, in dem eine Batterie oder Energiequelle, ein oder mehrere Beschleunigungssensoren, etwa ein dreiachsiger Beschleunigungssensor, analoge Beschleunigungsaufnehmer oder aber Beschleunigungsschalter und eine Recheneinheit mit einem Mikroprozessor zur Erfassung der Signale der Beschleunigungssensoren und zur Auswertung der Frequenz und der statischen Trumkraft des unter Spannung stehenden Antriebsriemens (1) vorgesehen sind, wobei die Berechnung dann gestartet wird, wenn drei aufeinander folgende Schwingungen/Schwingungszyklen eine Abweichung in ihren Perioden/Wellenlängen untereinander von weniger als 3% haben, wobei durch die Beschleunigungssensoren maximal zehn vollständige Schwingungszyklen erfasst und der Berechnung des Spannungszustandes zugrunde gelegt werden. Ebenfalls vorgesehen sind auch eine Einrichtung zur Anzeige des visualisierten Messergebnisses bzw. der Frequenz, wobei das Gehäuse an dem unter Spannung stehenden Antriebsriemen befestigbar und zusammen mit dem Antriebsriemen in Schwingungen versetzbar ist.

Eine vorteilhafte Weiterbildung der erfindungsgemäßen Vorrichtung besteht darin, dass das Gehäuse mit Befestigungsclip oder auch mit Klebe- oder Klettband am Riemen befestigbar ist. So ist das gesamte miniaturisierte Messgerät am unter Spannung stehenden Antriebsriemen befestigt, schwingt zusammen mit dem Bauteil/Riemen und benötigt keine zusätzlichen Gerätschaften zur Messung.

Eine weitere vorteilhafte Ausbildung besteht darin, dass die Vorrichtung eine Funkeinrichtung zur Übertragung und Darstellung der Ergebnisses der Messung bzw. der Berechnungsergebnisse/ermittelten Spannung per Funksignal an eine Basisstation aufweist, also die Vorrichtung etwa per Bluetooth, WLAN o.ä. kommunizieren kann und dadurch nicht unbedingt eine eigene Anzeige benötigt. Die Basisstation kann hier z.B. auch einfach ein Mobiltelefon sein, welches mit einer "Applikation", auch "App" genannt, die Ergebnisse sichtbar macht, Materialdaten zur Verfügung stellt oder auch Teile der Berechnung übernehmen kann. In solch einer Konstellation können Teile des Algorithmus, Materialparameter oder geometrische Kenngrößen in der Recheneinheit hinterlegt sein oder drahtlos aus weiteren Rechnern, Speichern oder über das Internet in die Recheneinheit geladen werden. Dies kann heute einfach und vorzugweise dadurch geschehen, dass Algorithmus, Materialparameter oder geometrische Kenngrößen in Form eines Apps auf einem Mobiltelefon, I-Pad oder Tablett-Computer bei Bedarf aufgerufen oder bereitgestellt werden.

Eine weitere vorteilhafte Ausbildung der Vorrichtung besteht darin, dass die gesamte elektronische Schaltung der Messvorrichtung auf einer im Gehäuse angeordneten miniaturisierten Platine angeordnet ist und die Gehäuseabmessungen den Abmessungen des unter Spannung stehendem Antriebsriemens angepasst sind bzw. ihnen mindestens teilweise entsprechen. Dies erleichtert die Befestigung der Vorrichtung an dem statisch belasteten Bauteil und verhindert, dass die Schwingungen des statisch belasteten Bauteils durch eine zusätzliche Massebelegung verfälscht werden. So kann etwa das Gehäuse einer solchen Vorrichtung zur Anwendung für Spannungsmessungen an Antriebsriemen so ausgebildet sein, dass etwa die Breite des Gehäuses der Breite des Antriebsriemens entspricht und die Länge des Gehäuses etwa zwei bis dreimal so groß wie die Breite des Gehäuses ausgebildet ist. Ein solches Gehäuse kann sehr einfach mithilfe eines Klettbandes am Riemen befestigt werden, wonach die Überprüfung der Riemenspannung/Zugspannung leicht durchgeführt, das Gehäuse schnell wieder abgenommen werden und der Riementrieb danach sofort in Betrieb gehen kann, wenn die Riemenspannung richtig eingestellt ist.

Wie bereits dargestellt, lässt sich das erfindungsgemäße Verfahren und damit auch die Vorrichtung zur Bestimmung der statischen Trumkraft eines unter Spannung stehenden Antriebsriemens verwenden, ebenso zur Bestimmung der statischen Kettenspannkraft einer unter Spannung stehenden Antriebskette oder zur Bestimmung der statischen Trumkraft eines unter Spannung stehenden Förderbandes. Bei allen diesen Anwendungen ist es dann nicht mehr erforderlich, umfangreiche Messmittel bereitzuhalten, welche teilweise sogar in gefährlicher Nähe dieser Bauteil aufgebaut werden müssen.

Anhand eines Ausführungsbeispieles soll die Erfindung näher erläutert werden. Es zeigen
- Fig. 1: Skizze zur Anwendung des Verfahrens gemäß des Anspruchs 1
- Fig. 2: Prinzip gemäß des Verfahrensanspruchs 1 zum Start der Ermittlung des Spannungszustands
- Fig. 3: Prinzip gemäß des Verfahrensanspruchs 1 zur Qualitätsverbesserung der Ermittlung des Spannungszustands (Begrenzung auf zehn Schwingungszyklen)
- Fig. 4: ein weiteres verfahrensgemäßes Prinzip zur Ermittlung des Spannungszustands

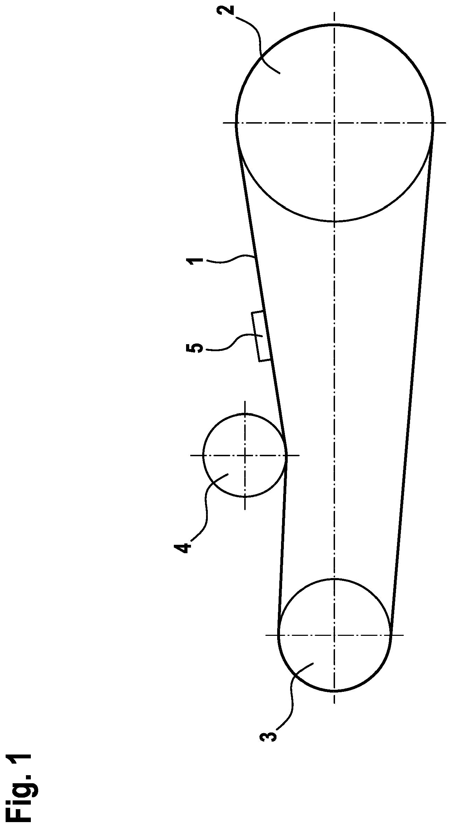

Die Fig. 1 zeigt anhand einer einfachen Skizze das Verfahren gemäß des Anspruchs 1 zur Bestimmung eines mechanischen Spannungszustandes in einem statisch belasteten Bauteil, hier zur Bestimmung der statischen Trumkraft eines unter Spannung stehenden Antriebsriemens 1, der die beiden Riemenscheiben 2 und 3 umläuft sowie durch die Spannrolle 4 gespannt wird.

Mit einem kleinen Metallstock oder einem kleinen Hammer wird das Bauteil, hier der Antriebsriemen 1 in Schwingungen versetzt. Die Schwingungen des Antriebsriemens 1 werden danach durch einen im Gehäuse 5 angeordneten, hier nicht näher dargestellten Beschleunigungssensor erfasst und als Eingangsgrößen einer aus Prozessoren, Speichern und Verarbeitungseinrichtungen bestehenden und ebenfalls im Gehäuse 5 angeordneten Recheneinheit zugeführt.

Als Sensor wird hier ein dreiachsiger Beschleunigungssensor verwendet. Dieser ermöglicht es, bis zu 3g (positiv und negativ) in jeder Achsrichtung zu messen, die dann linear über die Versorgungsspannung aufgeteilt werden. Zur Durchführung des erfindungsgemäßen Verfahrens reicht es, die Höhen-Achse auszulesen, da diese die Richtung beschreibt, in der der Sensor auf dem Riemen schwingt. Nichtsdestotrotz sind die anderen Achsen auf der Platine mit dem Mikrocontroller verbunden, um deren nachträgliche Verwendung zur Lageerkennung zu ermöglichen. Die Filterung der Ausgänge erfolgt über die Kondensatoren.

In der Recheneinheit wird mit Hilfe eines Algorithmus aus den erfassten Schwingungen unter Berücksichtigung von Materialparametern und geometrischen Kenngrößen des Antriebsriemens 1 die statische Zugspannung des Riemens, d.h. die statische Trumkraft berechnet und als Signal einer Anzeigeeinrichtung, etwa einem LCD-Display an oder auf dem Gehäuse zur Verfügung gestellt. Das Gehäuse 5 ist hier mit einem nicht näher dargestellten Befestigungsclip am Riemen 1 befestigt.

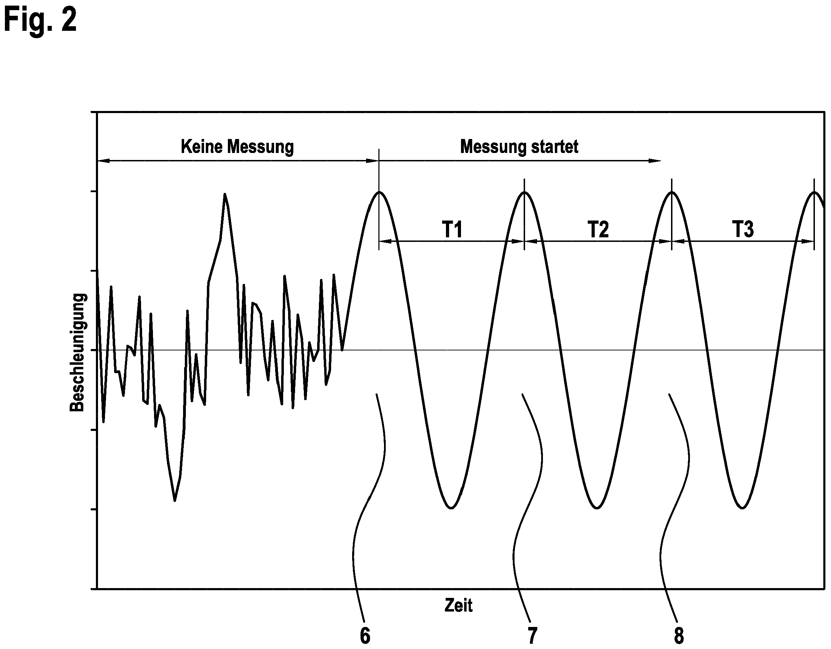

Fig. 2. zeigt das Prinzip gemäß des Verfahrensanspruchs 1 der Ermittlung des Spannungszustands, bei dem die Berechnung des Spannungszustandes gestartet wird, wenn drei aufeinander folgende Schwingungen/Schwingungszyklen 6, 7 und 8 eine Abweichung in ihrer Perioden/Wellenlängen T₁, T₂ und T₃ untereinander von weniger als 3% haben, so dass für deren Beträge gilt:
Δ (T₂-T₁) < 3%; Δ (T₃-T₂) < 3%; Δ (T₃-T₁) < 3%.

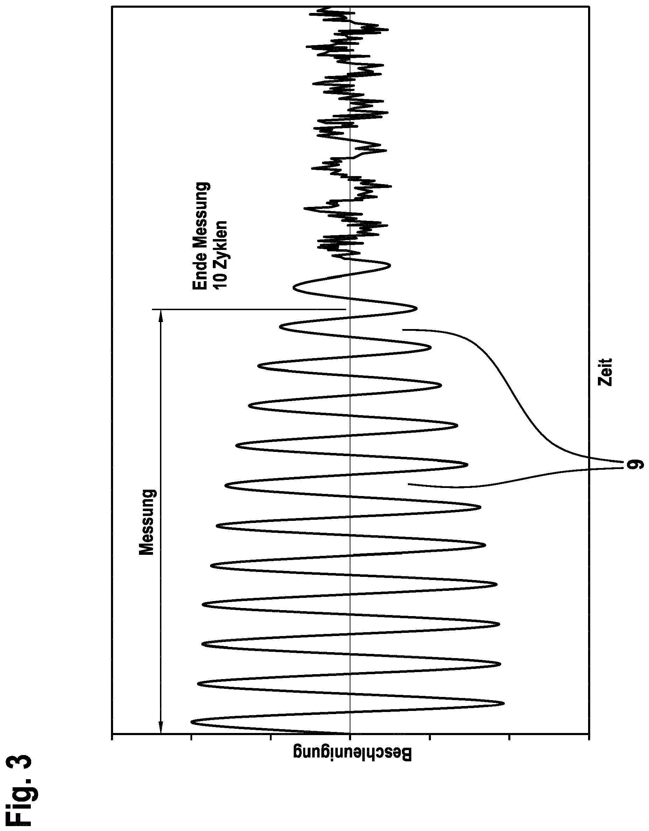

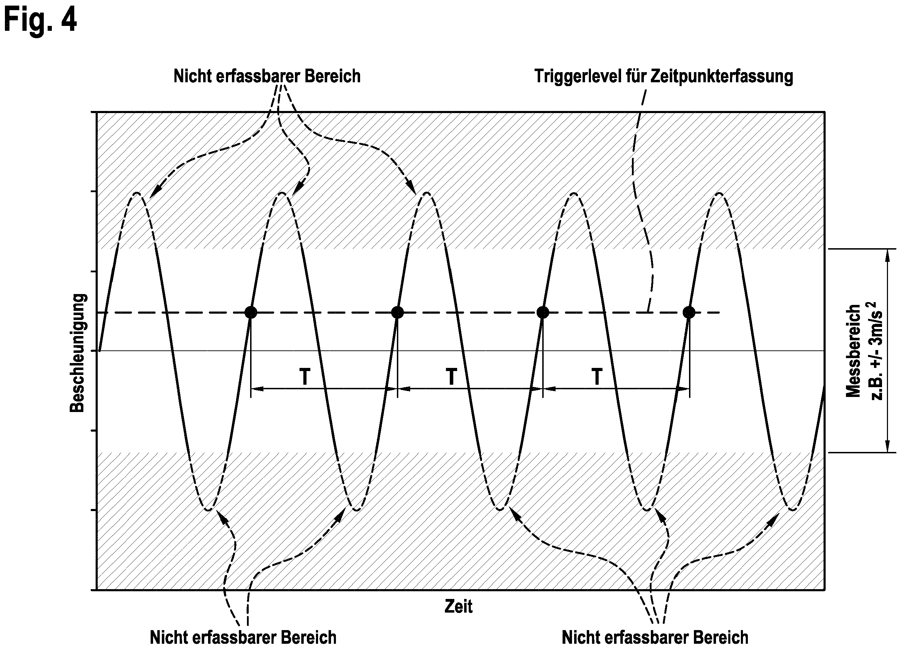

Fig. 3 zeigt das weitere Prinzip gemäß des Verfahrensanspruchs 1 der Ermittlung des Spannungszustands, bei dem maximal zehn vollständige Schwingungszyklen 9 erfasst und dann der Auswertung in Form einer Berechnung des Spannungszustandes zugrunde gelegt werden. Fig. 4 zeigt hierzu prinzipiell die vorteilhafte Verfahrensausbildung, bei der die Beschleunigungssensoren in den Schwingungen/Schwingungszyklen jeweils den Nulldurchgang einer Beschleunigung bzw. einen definierten Beschleunigungswert von hier +/- 3m/s² erfassen und wobei dann diese Werte der Ermittlung der Frequenz und der Spannung zugrunde gelegt werden.

### Bezugszeichenliste

### (Teil der Beschreibung)

- 1: Antriebsriemen
- 2: Riemenscheibe
- 3: Riemenscheibe
- 4: Spannrolle
- 5: Gehäuse
- 6: Schwingung/Schwingungszyklus
- 7: Schwingung/Schwingungszyklus
- 8: Schwingung/Schwingungszyklus
- 9: Schwingung/Schwingungszyklus

## Patentansprüche

1. Verfahren zur Bestimmung der statischen Trumkraft eines unter Spannung stehenden Antriebsriemens (1), bei dem der Antriebsriemen in Schwingungen versetzt und die Schwingungen bzw. die Schwingungszyklen (6, 7, 8, 9) des Antriebsriemens über Sensoren erfasst und als Eingangsgrößen einer aus Prozessoren, Speichern und Verarbeitungseinrichtungen bestehenden und in Form einer elektronischen Schaltung ausgebildeten Recheneinheit zugeführt werden, wobei in der Recheneinheit mit Hilfe eines Algorithmus aus den erfassten Schwingungen unter Berücksichtigung von Materialparametern und geometrischen Kenngrößen des Antriebsriemens die statische Trumkraft des unter Spannung stehenden Antriebsriemens (1) berechnet und als visualisiertes Signal einer Anzeigeeinrichtung bereitgestellt wird, wobei als Sensoren mit dem Antriebsriemen verbundene und die Schwingungen bzw. die Schwingungszyklen detektierende Beschleunigungssensoren eingesetzt werden, **dadurch gekennzeichnet, dass** die Berechnung des Spannungszustandes dann gestartet wird, wenn drei aufeinander folgende Schwingungen/Schwingungszyklen (6, 7, 8) eine Abweichung in ihren Perioden/Wellenlängen untereinander von weniger als 3% haben, wobei durch die Beschleunigungssensoren maximal zehn vollständige Schwingungen/Schwingungszyklen (9) erfasst und dann der Berechnung des Spannungszustandes zugrunde gelegt werden.

2. Verfahren nach Anspruch 1, bei dem die Beschleunigungssensoren jeweils den Nulldurchgang einer Beschleunigung bzw. einen definierten, begrenzten Beschleunigungswert erfassen.

3. Vorrichtung zur Durchführung des Verfahrens nach Anspruch 1 oder 2, **dadurch gekennzeichnet, dass** die Vorrichtung ein miniaturisiertes Gehäuse (5) aufweist, in dem folgende Einrichtungen vorgesehen sind:
- eine Batterie oder Energiequelle ,
- ein oder mehrere Beschleunigungssensoren
- eine Recheneinheit mit einem Mikroprozessor zur Erfassung der Signale der Beschleunigungssensoren, zur Auswertung der Frequenz und zur Berechnung der statischen Trumkraft des unter Spannung stehenden Antriebsriemens (1), wobei die Berechnung dann gestartet wird, wenn drei aufeinander folgende Schwingungen/Schwingungszyklen (6, 7, 8) eine Abweichung in ihren Perioden/Wellenlängen untereinander von weniger als 3% haben, wobei durch die Beschleunigungssensoren maximal zehn vollständige Schwingungszyklen (9) erfasst und der Berechnung des Spannungszustandes zugrunde gelegt werden,
- einer Einrichtung zur Anzeige des visualisierten Messergebnisses bzw. der Spannung und/oder der Frequenz,
wobei das Gehäuse (5) an dem unter Spannung stehenden Antriebsriemen (1) befestigbar und zusammen mit dem Antriebsriemen in Schwingungen versetzbar ist.

4. Vorrichtung nach Anspruch 3, bei der das Gehäuse (5) mit einem Befestigungsclip am Antriebsriemen befestigbar ist.

5. Vorrichtung nach Anspruch 3, bei der das Gehäuse (5) am Antriebsriemen (1) mit Klebe- oder Klettband befestigbar ist.

6. Vorrichtung nach einem der Ansprüche 3 bis 5, aufweisend eine Funkeinrichtung zur Übertragung und Darstellung der Ergebnisse der Messung bzw. der Berechnungsergebnisse/ermittelten Spannung per Funksignal an eine Basisstation.

7. Vorrichtung nach einem der Ansprüche 3 bis 6, bei der die gesamte elektronische Schaltung auf einer im Gehäuse (5) angeordneten miniaturisierten Platine angeordnet ist und die Gehäuseabmessungen den Abmessungen des unter Spannung stehendem Antriebsriemens (1) mindestens teilweise entsprechen.

## Claims

1. Method for determining the static belt run force of a drive belt (1) under tensile stress, in which method the drive belt is made to oscillate and the oscillations or the oscillation cycles (6, 7, 8, 9) of the drive belt are sensed by means of sensors and fed as input variables to a computing unit which consists of processors, memories and processing devices and is designed in the form of an electronic circuit, wherein the static belt run force of the drive belt (1) under tensile stress is calculated in the computing unit from the sensed oscillations with the aid of an algorithm, taking into consideration material parameters and geometrical characteristics of the drive belt, and is provided as a visualized signal to a display device, wherein acceleration sensors connected to the drive belt and detecting the oscillations or the oscillation cycles are used as sensors, **characterized in that** the calculation of the stress state is then initiated if three successive oscillations/oscillation cycles (6, 7, 8) have a deviation in their periods/wavelengths from one another of less than 3%, wherein a maximum of ten complete oscillations/oscillation cycles (9) are sensed by the acceleration sensors and then used as a basis for the calculation of the stress state.

2. Method according to Claim 1, in which the acceleration sensors respectively sense the zero crossing of an acceleration or a defined, limited acceleration value.

3. Device for carrying out the method according to Claim 1 or 2, **characterized in that** the device has a miniaturized housing (5), in which the following devices are provided:
- a battery or power source,
- one or more acceleration sensors,
- a computing unit with a microprocessor for sensing the signals of the acceleration sensors, for evaluating the frequency and for calculating the static belt run force of the drive belt (1) under tensile stress, wherein the calculation is then initiated if three successive oscillations/oscillation cycles (6, 7, 8) have a deviation in their periods/wavelengths from one another of less than 3%, wherein a maximum of ten complete oscillation cycles (9) are sensed by the acceleration sensors and used as a basis for the calculation of the stress state,
- a device for displaying the visualized measurement result or the stress and/or the frequency,
wherein the housing (5) can be fastened to the drive belt (1) under tensile stress and can be made to oscillate together with the drive belt.

4. Device according to Claim 3, in which the housing (5) can be fastened to the drive belt by a fastening clip.

5. Device according to Claim 3, in which the housing (5) can be fastened to the drive belt (1) by adhesive tape or Velcro strip.

6. Device according to one of Claims 3 to 5, comprising a radio device for transmitting and displaying the results of the measurement or the calculation results/determined stress by radio signal to a base station.

7. Device according to one of Claims 3 to 6, in which the entire electronic circuit is arranged on a miniaturized board arranged in the housing (5) and the housing dimensions correspond at least partially to the dimensions of the drive belt (1) under tensile stress.

## Revendications

1. Procédé permettant de déterminer la force de brin statique d'une courroie d'entraînement (1) sous tension, dans lequel la courroie d'entraînement est mise en oscillation, et les oscillations ou les cycles d'oscillation (6, 7, 8, 9) de la courroie d'entraînement sont détecté(e)s par des capteurs et amené(e)s en tant que grandeurs d'entrée à une unité de calcul composée de processeurs, de mémoires et de dispositifs de traitement et réalisée sous la forme d'un circuit électronique, dans lequel la force de brin statique de la courroie d'entraînement (1) sous tension est calculée dans l'unité de calcul à l'aide d'un algorithme à partir des oscillations détectées en tenant compte de paramètres du matériau et de grandeurs caractéristiques géométriques de la courroie d'entraînement, et est fournie à un dispositif d'affichage en tant que signal visualisé, des capteurs d'accélération reliés à la courroie d'entraînement et détectant les oscillations ou les cycles d'oscillation étant mis en œuvre en tant que capteurs, **caractérisé en ce que** le calcul de l'état de tension est lancé quand trois oscillations/cycles d'oscillation consécutifs (6, 7, 8) présentent entre eux un écart de moins de 3 % au niveau de leurs périodes/longueurs d'onde, au maximum dix oscillations/cycles d'oscillation (9) complets étant détectés par les capteurs d'accélération et ensuite utilisés comme base pour le calcul de l'état de tension.

2. Procédé selon la revendication 1, dans lequel les capteurs d'accélération détectent respectivement le passage par zéro d'une accélération ou d'une valeur d'accélération limitée définie.

3. Dispositif permettant d'exécuter le procédé selon la revendication 1 ou 2, **caractérisé en ce que** le dispositif présente un boîtier miniaturisé (5) dans lequel les équipements suivants sont prévus :
- une batterie ou source d'énergie,
- un ou plusieurs capteurs d'accélération,
- une unité de calcul dotée d'un microprocesseur pour détecter les signaux des capteurs d'accélération afin d'évaluer la fréquence et de calculer la force de brin statique de la courroie d'entraînement (1) sous tension, le calcul étant lancé quand trois oscillations/cycles d'oscillation consécutifs (6, 7, 8) présentent entre eux un écart de moins de 3 % au niveau de leurs périodes/longueurs d'onde, au maximum dix oscillations/cycles d'oscillation (9) complets étant détectés par les capteurs d'accélération et ensuite utilisés comme base pour le calcul de l'état de tension,
- un équipement pour afficher le résultat de mesure visualisé ou la tension et/ou la fréquence,
dans lequel le boîtier (5) peut être fixé à la courroie d'entraînement (1) sous tension et peut être mis en oscillation conjointement avec la courroie d'entraînement.

4. Dispositif selon la revendication 3, dans lequel le boîtier (5) peut être fixé à la courroie d'entraînement à l'aide d'une attache de fixation.

5. Dispositif selon la revendication 3, dans lequel le boîtier (5) peut être fixé à la courroie d'entraînement (1) à l'aide d'un ruban adhésif ou d'une bande auto-agrippante.

6. Dispositif selon l'une quelconque des revendications 3 à 5, présentant un équipement radio pour transmettre et représenter les résultats de la mesure ou les résultats de calcul/la tension déterminée par un signal radio à une station de base.

7. Dispositif selon l'une quelconque des revendications 3 à 6, dans lequel le circuit électronique tout entier est disposé sur une platine miniaturisée disposée dans le boîtier (5) et les dimensions de boîtier correspondent au moins en partie aux dimensions de la courroie d'entraînement (1) sous tension.
